# EUROPEAN PATENT SPECIFICATION

(11) **EP 1 502 567 B1**
(45) Date of publication and mention of the grant of the patent: **03.05.2006**
(21) Application number: 04104511.3
(22) Date of filing: 14.03.2000
(51) Int. Cl.: A61J 1/00

(54) **Flask for a liquid precision dispenser**
Behälter für eine Flüssigkeits-Präzisionsabgabevorrichtung
Flacon pour un distributeur de précision de liquide

(30) Priority: 16.03.1999 IT FI990052
(43) Date of publication of application: 02.02.2005
(62) Divisional of application: 00916935.0
(73) Proprietor: L. MOLTENI & C. DEI FRATELLI ALITTI SOCIETA' DI ESERCIZIO S.P.A, 50018 Scandicci (IT)
(72) Inventor: ANGELI, Roberto, 50018, SCANDICCI (IT)
(74) Representative: Gervasi, Gemma

(56) References cited:
- EP-A- 0 715 891
- FR-A- 2 759 923

## Description

### Field of the invention and prior art

The present invention regards flasks for containing liquids in particular those for use in precision dispensers for liquids.

In the art are known many apparatuses which allow a precise delivery of liquids; EP 00 916 935.0 (of which the present application is a divisional) describes a particular embodiment of such apparatuses.

However, when the liquids to be delivered are contained in flasks and it must be assured that the totality of the liquid contained in the flask has been delivered (as it is the case for example in the case of medicaments as for example methadone) not only the dispenser but the flask itself plays an important role and it is essential that it is conceived in a particular form in order to achieve the wanted purpose, moreover the operator must have the possibility of easily checking the content and the management of the flasks.

A flask with a main body, a threaded neck and a pair of inclined bottom surfaces is known from EP-A-0 715 891. A flask with a main body, threaded neck and central collection cup in the flask bottom is known from FR-A-2 759 923.

### Scope of the invention

It is therefore a purpose of the present invention to provide a flask that guarantees complete delivery of the liquid contained in it and, in addition, to ensure that it is possible to check also management of the flasks with certainty.

### Summary of the invention

The invention refers to a flask comprising a bottom which consists of a pair of surfaces which are inclined and which converge centrally into a cup forming the lowest point of storage of the liquid in the flask.

### Brief description of the drawings

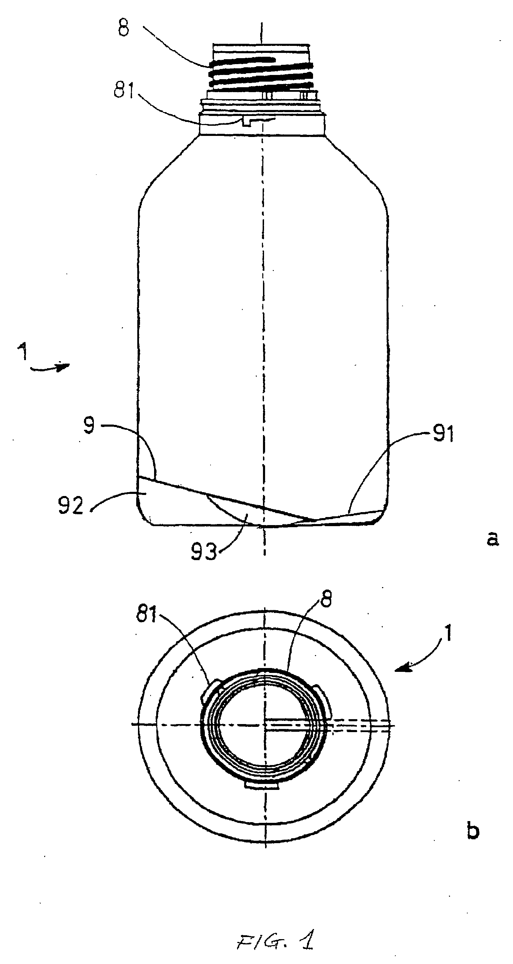

Figures 1a and 1b present, respectively, a side view and a top view of a flask according to the invention.

### Detailed description of the invention

With reference figures 1a and 1b, the flasks according to the invention consists of a main body 1 provided with a threaded neck 8 for connection to a seal-type packing plug. The neck is moreover provided with teeth 81 for the bayonet joint of a coupling for connection with the hydraulic circuit of the apparatus.

The bottom of the flask consists of a pair of surfaces 9, 91, which are slightly inclined and which converge into a hemispherical cup 93 which forms the lowest point of storage of the liquid in the flask.

A fin 92 is provided underneath the surface 9 to guarantee horizontal support for the flask in its housing on the apparatus.

In order to ensure that the suction tube, through which the liquid is drawn from the flask, always draws the liquid from the minimum-level point of the cup 93, the attachment is advantageously made so that it is integral with the tube and finds a secure top reference point in the bayonet connection.

The flask 1 is further equipped with means of identification, which may be read by appropriate sensors of the dispenser.

In a preferred embodiment, the said means are of the RFID radio-frequency type, according to a recognition technique which is in itself already known, whilst the corresponding sensors are fixed to the apparatus and connected to the control unit of the apparatus, which checks the volumes and the destination of the amounts delivered.

As it is easy to understand from the description and the enclosed drawings the flask according to the invention allows a total delivery of the liquid contained in it preventing waste or non permitted utilisation of liquid possibly remaining undelivered in the flask.

## Claims

1. A flask for liquids, for use in precision dispensers for liquids, consisting of a main body (1) provided with a threaded neck (8) **characterised in that** the neck is equipped with means (81) for the press-block coupling of an attachment of a dispenser, and **in that** the bottom of the flask consists of a pair of surfaces (9, 91), which are inclined and which converge centrally into a cup (93) forming the lowest point of storage of the liquid in the flask (1).

2. A flask according to Claim 1, **characterised in that** the said means (81) consists of a bayonet coupling.

3. A flask according to Claim 1, **characterised in that** a fin (92) is provided underneath the surface (9) to guarantee horizontal support for the flask in its housing on the dispenser.

4. A flask according to Claim 1, **characterised in that** it is equipped with means of identification which may be read by appropriate means of the dispenser.

5. A flask according to Claim 4, **characterised in that** the said means are of the RFID type.

6. A flask according to Claim 1, **characterised in that** it is made of plastic material.

## Patentansprüche

1. Behälter für Flüssigkeiten zur Verwendung in Flüssigkeits-Präzisionsabgabevorrichtungen, bestehend aus einem Hauptkörper (1) mit einem Hals mit Gewinde (8), **dadurch gekennzeichnet, dass** der Hals mit einem Mittel (81) für die Pressblockkopplung einer Halterung einer Abgabevorrichtung versehen ist und dass der Boden des Behälters aus einem Paar von Flächen (9, 91) besteht, die geneigt sind und zur Mitte in einer Schale (93) zusammenlaufen, die der niedrigste Punkt ist, an dem die Flüssigkeit in dem Behälter (1) aufbewahrt wird.

2. Behälter gemäß Anspruch 1, **dadurch gekennzeichnet, dass** das genannte Mittel (81) aus einer Bajonettkupplung besteht.

3. Behälter gemäß Anspruch 1, **dadurch gekennzeichnet, dass** unterhalb der Fläche (9) eine Rippe (92) vorhanden ist, um sicherzustellen, dass der Behälter in seinem Gehäuse auf der Abgabevorrichtung horizontal gehalten wird.

4. Behälter gemäß Anspruch 1, **dadurch gekennzeichnet, dass** er mit einem Identifikationsmittel ausgestattet ist, das von einem geeigneten Mittel der Abgabevorrichtung gelesen werden kann.

5. Behälter gemäß Anspruch 4, **dadurch gekennzeichnet, dass** das genannte Mittel ein RFID-Mittel ist.

6. Behälter gemäß Anspruch 1, **dadurch gekennzeichnet, dass** er aus einem Kunststoffmaterial besteht.

## Revendications

1. Flacon pour liquides, destiné à être utilisé dans des distributeurs de précision pour liquides, comportant un corps principal (1) muni d'un col fileté (8), **caractérisé en ce que** le col est équipé d'un moyen (81) pour le couplage par pression d'un élément d'un distributeur, et **en ce que** le fond du récipient comprend une paire de surfaces (9, 91), qui sont inclinées et qui convergent vers le centre dans une coupe (93) formant le point le plus bas de stockage du liquide dans le flacon (1).

2. Flacon selon la revendication 1, **caractérisé en ce que** ledit moyen (81) comporte un raccord à baïonnette.

3. Flacon selon la revendication 1, **caractérisé en ce qu'**une ailette (92) est disposée sous la surface (9) pour garantir une assise horizontale pour le flacon dans son logement dans le distributeur.

4. Flacon selon la revendication 1, **caractérisé en ce qu'**il est équipé d'un moyen d'identification, qui peut être lu par un moyen approprié du distributeur.

5. Flacon selon la revendication 1, **caractérisé en ce que** ledit moyen est du type RFID (Identifieur radio fréquence).

6. Flacon selon la revendication 1, **caractérisé en ce qu'**il est fait d'un matériau plastique.
